# EUROPÄISCHE PATENTSCHRIFT

(11) **EP 4 440 852 B1**
(45) Veröffentlichungstag und Bekanntmachung des Hinweises auf die Patenterteilung: **25.02.2026**
(21) Anmeldenummer: 22800581.5
(22) Anmeldetag: 25.10.2022
(51) Int. Cl.: B60C 9/09, B60C 9/02, B60C 15/06

(54) **BELASTUNGSRESISTENTER FAHRZEUGLUFTREIFEN MIT VERRINGERTER GERÄUSCHEMISSION**
STRESS RESISTANT TIRE WITH REDUCED NOISE EMISSION
PNEUS POUR VÉHICULES RÉSISTANTS AU STRESS AVEC ÉMISSIONS SONORES RÉDUITES

(30) Priorität: 03.12.2021 DE 102021213750
(43) Veröffentlichungstag der Anmeldung: 09.10.2024
(73) Patentinhaber: Continental Reifen Deutschland GmbH, 30175 Hannover (DE)
(72) Erfinder: LUDWIG, Reinhard, 30175 Hannover (DE); SCHÜRMANN, Oliver, 30175 Hannover (DE); HÖLZER, Jürgen, 30175 Hannover (DE); GÜNZLER, Fabian, 30175 Hannover (DE)
(74) Vertreter: Continental Corporation
(86) Internationale Anmeldenummer: PCT/DE2022/200243
(87) Internationale Veröffentlichungsnummer: WO 2023/098951

(56) Entgegenhaltungen:
- DE-A1- 102016 216 732
- KR-A- 20040 061 326
- US-A1- 2011 048 603
- US-A1- 2013 092 303
- US-A1- 2016 325 589

## Beschreibung

Die Erfindung betrifft einen Fahrzeugluftreifen, insbesondere einen belastungsresistenten Fahrzeugluftreifen mit im Betrieb verringerter Geräuschemission.

Moderne Fahrzeugluftreifen sind im Einsatz zumeist vielfältigen Arten von mechanischen Belastungen ausgesetzt. Eine besonders schwerwiegende mechanische Belastung tritt dabei regelmäßig dann auf, wenn der Fahrzeugluftreifen ein Hindernis überrollt, beispielsweise in der Form von Schlaglöchern oder Bordsteinen. Insbesondere bei einem im Wesentlichen senkrechten Auftreten des Fahrzeugluftreifens auf eine Hinderniskante wird dieser stark beansprucht und deformiert. Hierbei wird die Seitenwand des Fahrzeugluftreifens gefaltet und zwischen dem Felgenhorn und dem Hindernis eingequetscht. Dadurch treten lokal sehr hohe Kräfte auf, welche beispielsweise die Verstärkungskorde in der Reifenkarkasse zum Reißen bringen und hierdurch ein lokales Materialversagen bewirken können.

Die bei der vorstehend beschriebenen Form der Belastung auftretenden Materialfehler im Fahrzeugluftreifen äußern sich dabei infolge der erfahrenen Deformation häufig als Materialrisse, die sowohl im Schulterbereich als auch im Wulstbereich des Fahrzeugluftreifens auftreten. Dieses charakteristische Defektmuster wird zuweilen auch als "snake bites" bezeichnet, da die zwei Risse an die Fangzähne einer Schlange erinnern. Der grundsätzliche Aufbau moderner Fahrzeugluftreifen ist aus dem Stand der Technik hinreichend bekannt und wird beispielsweise in der JP 2001191722A, der JP 2019026231, der US 3554261A, der US 4185675 A1 oder der US 2014/0124116 A1 offenbart.

Weiterer Stand der Technik ist in der DE 102016216732 A1, der KR 20040061326 A und der US 2016/325589 A1 offenbart.

Die Resistenz des Fahrzeugluftreifens gegen solche Schäden, welche beim Überrollen von Schlaglöchern oder anderen Hindernissen auftreten, lässt sich bekanntermaßen dadurch erhöhen, dass im Fahrzeugluftreifen mehrere Karkasslagen verwendet werden, sodass die Karkasse im Seitenbereich über einen mehrlagigen Aufbau verfügt, der dem Reifen die notwendige mechanische Beständigkeit verleihen. Nachteilig ist jedoch, dass zusätzliche Karkasslagen das Gesamtgewicht des Fahrzeugluftreifens und zumeist auch den Rollwiderstand des Reifens erhöhen. Ganz besonders nachteilig ist jedoch, dass zusätzliche Karkasslagen auch die im Betrieb auftretenden Fahrgeräusche verstärkt übertragen und beim Betrieb zu einem höheren Geräuschpegel beitragen, welcher auch als "rumble noise" bezeichnet wird. Es besteht somit ein Zielkonflikt zwischen einer optimierten Seitenwandrobustheit auf der einen Seite und einem niedrigen Rollwiderstand sowie einer vorteilhaften Geräuschemission, insbesondere im Frequenzbereich bis 180 Hz, auf der anderen Seite.

Es war die primäre Aufgabe der vorliegenden Erfindung, die Nachteile des Standes der Technik auszuräumen oder zumindest zu verringern.

Insbesondere war es eine Aufgabe der vorliegenden Erfindung, einen Fahrzeugluftreifen anzugeben, mit dem der Zielkonflikt zwischen der Seitenwandrobustheit und einem günstigen Rollwiderstand sowie einem vorteilhaften Geräuschverhalten verbessert werden kann. Insbesondere war es dabei die Aufgabe der vorliegenden Erfindung, dass der Zielkonflikt zwischen der Seitenwandrobustheit und den im Betrieb der Fahrzeugluftreifen auftretenden Geräusche bestmöglich optimiert wird.

Die anzugebenden Fahrzeugreifen sollten dabei wünschenswerterweise über ausgezeichnete Fahreigenschaften verfügen und auch beim Überrollen von kantigen Hindernissen einen hohen Widerstand gegen mechanische Beschädigungen aufweisen, der vorteilhafterweise mit solchen Fahrzeugluftreifen vergleichbar sein sollte, welche mehrere Karkasslagen einsetzen. Insoweit war es eine Aufgabe der Erfindung, dass das Auftreten von als "snake bites" bekannten Defekten vermindert oder sogar vollständig unterdrückt werden sollte bzw. dass die Anfälligkeit für diese Defekte und deren Auswirkungen auf die Betriebssicherheit vermindert werden sollt.

Insoweit war es wünschenswert, dass die anzugebenden Fahrzeugluftreifen hinsichtlich der zur Lösung der vorstehenden Probleme eingesetzten konstruktiven Maßnahmen sehr flexibel sind und die gefundene Lösung sich leicht an verschiedenen existierenden Konstruktionen von Fahrzeugluftreifen anpassen lässt. Insoweit war es wünschenswert, dass die anzugebenden Fahrzeugluftreifen unter Verwendung solcher Materialien und Fertigungsmethoden herstellbar sein sollten, die bereits heute in der Fertigung moderner Fahrzeugluftreifen zum Einsatz kommen.

Es war eine ergänzende Aufgabe der vorliegenden Erfindung, bevorzugte Ausgestaltungen anzugeben, mit denen sich die Resistenz der anzugebenden Fahrzeugluftreifen gegen mechanische Beschädigungen weiter erhöhen lässt und die eine spezifische Anpassung der anzugebenden Fahrzeugluftreifen auf verschiedene Belastungsszenarien ermöglicht, sodass die anzugebenden Fahrzeugluftreifen gezielt für besonders anspruchsvolle Anwendungen ausgelegt werden können.

Es war eine ergänzende Vorgabe der vorliegenden Erfindung, dass das Gesamtgewicht der anzugebenden Fahrzeugluftreifen und der Rollwiderstand gegenüber einem Fahrzeugluftreifen mit einem mehrlagigen Karkassendesign nicht nachteilig sein und idealerweise sogar verbessert sein sollte.

Die Erfinder der vorliegenden Erfindung haben nunmehr erkannt, dass die vorstehend beschriebenen Aufgaben überraschenderweise gelöst werden können, wenn statt einer zusätzliche Karkasslage lediglich selektiv Verstärkungselemente an spezifischen Positionen des Fahrzeugluftreifens platziert werden, wie es in den Ansprüchen definiert ist. Diese überraschende Lehre konnte dabei aus Experimenten abgeleitet werden, in denen die unterste Karkasslage einer mehrlagigen Reifenkarkasse im Flankenbereich der Reifenkarkasse gezielt unterbrochen wurde, sodass keine unmittelbare Verbindung zwischen den beiden Teilen der aufgespaltenen Karkasslage bestand. Durch die Unterbrechung der Karkasslage wurde zunächst eine Federsteifigkeit der Seitenwand erreicht, die der einer lediglich einlagigen Karkasse ähnelte. Hierdurch konnte überraschenderweise der Geräuschpegel beim Einsatz der Fahrzeugluftreifen verbessert werden, insbesondere im niederfrequenten Bereich bis 180 Hz. Gleichzeitig war es überraschenderweise möglich, in den Zonen des Fahrzeugluftreifens, in denen es im Falle einer Hindernisüberrollung zu einer Seitenwandquetschung und daraus resultierenden Defekten kommt, quasi ein zweilagiges Karkassendesign beizubehalten und hierdurch lokal die notwendige mechanische Stabilität und Resistenz gegen Beschädigungen zu gewährleisten. Ausgehend von diesen vielversprechenden Ergebnissen ist es den Erfindern der vorliegenden Erfindung gelungen, die Lehre in vorteilhafterweise weiterzuentwickeln, wobei sich überraschenderweise gezeigt hat, dass die vorstehend beschriebenen Vorteile durch den gezielten Einsatz von Verstärkungselementen erreicht werden können, wodurch eine deutliche Vereinfachung des Reifenaufbaus und eine weitere Reduktion des Reifengewichts sowie eine Verbesserung des Rollwiderstands erreicht werden können, ohne die mechanische Stabilität und die Widerstandskraft gegen "snake bites" nachteilig zu beeinflussen.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft einen Fahrzeugluftreifen gemäß Anspruch 1.

Fahrzeugluftreifen, welche über eine Reifenkarkasse verfügen, sind dem Fachmann aus dem Stand der Technik bekannt. Bevorzugt ist dabei ein erfindungsgemäßer Fahrzeugluftreifen, wobei der Fahrzeugluftreifen ein PKW-Reifen ist. Ebenso ist es üblich, dass oberhalb der Reifenkarkasse, d. h. radial außenliegend, ein Laufstreifen vorgesehen ist, welcher für den späteren Kontakt mit der Fahrbahn bestimmt ist. Bevorzugt ist dabei ein erfindungsgemäßer Fahrzeugluftreifen, wobei der Laufstreifen an der der Reifenkarkasse abgewandten Außenseite ein Profil aufweist. Bevorzugt ist zudem ein erfindungsgemäßer Fahrzeugluftreifen, wobei der Laufstreifen einen oder mehrere Laufstreifen-Gummiwerkstoffe umfasst.

Zudem verfügen die aus dem Stand der Technik bekannten Fahrzeugluftreifen regelmäßig auf beiden Seiten über einen Wulstbereich, welcher dafür vorgesehen ist, bei der Anbringung des Fahrzeugluftreifens auf einer Felge für die notwendige Stabilität zu sorgen.

Moderne Fahrzeugluftreifen verfügen zumeist über eine ideale Rotationssymmetrie, sodass sie regelmäßig entlang des gesamten Umfangs im Wesentlichen den gleichen Querschnitt aufweisen. Deshalb ist es für den Fachmann üblich, den Aufbau von Fahrzeugluftreifen durch Darstellung einer Querschnittsansicht zu beschreiben. Für den Fachmann ist es jedoch selbstverständlich, dass die Reifenkarkasse mit ihren Bereichen, der Laufstreifen und die Kernfahnen strang- bzw. ringförmige Elemente sind, welche sich im Regelfall um den gesamten Fahrzeugluftreifen herum erstrecken.

Bei Fahrzeugluftreifen handelt es sich um elastomere Produkte, deren Form und Gestalt maßgeblich nicht nur von der Konstruktion abhängig ist, sondern auch von dem im Inneren des Fahrzeugluftreifens herrschenden Druck bzw. der im Einsatz erfahrenen Belastung. Dem Fachmann ist insoweit völlig bewusst, dass die präzise Beschreibung der Position von Bauteilen in der Querschnittsansicht des Fahrzeugluftreifens nicht trivial ist. Deshalb ist es zielführend, an der Karkasse unterschiedliche Bereiche zu identifizieren, relativ zu denen sich die Position der eingesetzten Komponenten leicht definieren lässt. In Übereinstimmung mit dem fachmännischen Verständnis weist die Reifenkarkasse einen Zentralbereich auf, welcher unterhalb des Laufstreifens verläuft und der auf beiden Seiten von einem Flankenbereich der Reifenkarkasse eingerahmt wird. Für die überwiegende Zahl der Reifenkonstruktionen relevant ist insoweit ein erfindungsgemäßer Fahrzeugluftreifen, wobei die Breite des Zentralbereichs der Breite des Laufstreifens entspricht, jeweils quer zur Umfangsrichtung, und der Laufstreifen in radial nach außen weisender Richtung vollständig oberhalb des Zentralbereichs angeordnet ist.

Die Flankenbereiche liegen im Fahrzeugluftreifen im Bereich der Reifenseitenwand, wobei sich im Übergang zwischen dem Zentralbereich und den zwei Flankenbereichen der Teil des Fahrzeugluftreifens befindet, welcher vom Fachmann regelmäßig als Reifenschulter bezeichnet wird. An den unteren Enden der beiden Flankenbereiche schließen sich die Wulstbereiche an, d. h. die Bereiche der Reifenkarkasse, welche im Bereich der Reifenwulst angeordnet sind. Da die vorstehend definierten Fahrzeugluftreifen auf beiden Seiten über eine sog. Kernfahne verfügen, können die jeweiligen Wulstbereiche vom Fachmann zwanglos über die Position der Kernfahne identifiziert werden. Für die überwiegende Zahl der Reifenkonstruktionen relevant ist somit ein erfindungsgemäßer Fahrzeugluftreifen, wobei sich der erste Wulstbereich der Reifenkarkasse vom untersten Punkt der Reifenkarkasse in radialer Richtung bis zu der Höhe der ersten Kernfahne erstreckt, und wobei sich der zweite Wulstbereich der Reifenkarkasse vom untersten Punkt der Reifenkarkasse in radialer Richtung bis zu der Höhe der zweiten Kernfahne erstreckt.

Für die überwiegende Zahl der Reifenkonstruktionen relevant ist daher auch ein erfindungsgemäßer Fahrzeugluftreifen, wobei der erste Flankenbereich zwischen dem ersten Wulstbereich und dem Zentralbereich angeordnet ist, und wobei der zweite Flankenbereich zwischen dem zweiten Wulstbereich und dem Zentralbereich angeordnet ist, und/oder wobei der erste Flankenbereich und der zweite Flankenbereich nicht unterhalb des Laufstreifens und nicht unterhalb einer Kernfahne liegen und/oder wobei der Übergang vom Zentralbereich in den ersten Flankenbereich und den zweiten Flankenbereich auf Höhe der Reifenschultern erfolgt.

Auch wenn die theoretische Untergliederung der Reifenkarkasse in die verschiedenen Bereiche auf den ersten Blick künstlich anmutet, ist sie für den Fachmann in der Praxis jedoch zwanglos und zuverlässig vorzunehmen, da der Fachmann den Zentralbereich, welcher an den Schultern des Reifens in die beiden Flankenbereiche übergeht, die wiederum auf Höhe der Kernfahnen in die Wulstbereiche übergehen, in der Praxis zwanglos identifizieren kann. Über diese Bereiche hinaus umfasst die Reifenkarkasse bei modernen Fahrzeugluftreifen in den meisten Fällen auch noch Umschlagbereiche, d. h. Bereiche der Reifenkarkasse, welche am Ende der Wulstbereiche um die Wulst herumgeschlagen werden und als Umschlag an der Seite der Reifenkarkasse wieder in Richtung des Laufstreifens verlaufen.

Der erfindungsgemäße Fahrzeugluftreifen umfasst nunmehr zumindest vier verschiedene Verstärkungselemente, von denen zwei im oberen Bereich des Fahrzeugluftreifens und zwei im unteren Bereich des Fahrzeugluftreifens angeordnet werden. Die oberen Verstärkungselemente werden im Bereich der Reifenschulter, d. h. an der Verbindung zwischen dem Zentralbereich und dem Flankenbereich so angeordnet, dass diese jeweils mit dem Zentralbereich und dem ersten bzw. dem zweiten Flankenbereich in Kontakt stehen. Entsprechend werden diese Verstärkungselemente auch als Schulterverstärkungen bezeichnet. Das zweite Paar an Verstärkungselementen wird hingegen in den jeweiligen Wulstbereichen angeordnet, d. h. auf eine Weise an der Reifenkarkasse befestigt, dass die unteren Verstärkungselemente zumindest teilweise in die jeweiligen Wulstbereiche hineinragen.

Die vorstehende Definition bezüglich der Beabstandung der jeweiligen Verstärkungselemente bedeutet, dass die oberen Verstärkungselemente nicht unmittelbar mit den unteren Verstärkungselementen in Kontakt stehen, d. h. dass das erste obere Verstärkungselement und das erste untere Verstärkungselement ebenso voneinander beabstandet und getrennt sind wie das zweite obere Verstärkungselement und das zweite untere Verstärkungselement. Es versteht sich, dass das erste und das zweite untere Verstärkungselement jeweils auch vom gegenüberliegenden zweiten bzw. ersten oberen Verstärkungselement getrennt sind. Somit handelt es sich zumindest bei den unteren Verstärkungselementen um separate Verstärkungselemente.

Für den Fachmann ist angesichts der in einem Fahrzeugluftreifen vorherrschenden Symmetrie verständlich, warum die vorstehend beschriebenen Komponenten, welche zumeist im Bereich der Seitenwand des Fahrzeugluftreifens angeordnet werden, jeweils über ein erstes und ein zweites Element definiert werden, da diese verständlicherweise auf beiden Seiten des Fahrzeugluftreifens vorliegen. Es mag für bestimmte hochspezialisierte Anwendungen vorteilhaft sein, die verschiedenen Seiten des Fahrzeugluftreifens unterschiedlich auszuführen und hierfür beispielsweise die Art und/oder Position des ersten und des zweiten unteren Verstärkungselements auf den verschiedenen Seiten des Fahrzeugluftreifens unterschiedlich auszuführen. Der Fachmann versteht jedoch, dass es für die überwiegende Zahl von Anwendungen explizit bevorzugt ist, wenn der Fahrzeugluftreifen auf beiden Seiten des Fahrzeugluftreifens über eine im Wesentlichen gleiche Konstruktion verfügt, sodass die ersten und zweiten Elemente jeweils gleichartig ausgeführt und positioniert werden. Entsprechend ist bei sämtlichen nachfolgenden Überlegungen ganz besonders bevorzugt, wenn die jeweiligen Merkmale bevorzugter Ausführungsformen auf beiden Seiten des Fahrzeugluftreifens, d. h. jeweils für das erste und zweite Element, in gleicher Weise umgesetzt werden.

Wie vorstehend beschrieben, sind die Kernfahnen und die Verstärkungselemente an der Karkasse angeordnet. In Übereinstimmung mit dem fachmännischen Verständnis bedeutet dies, dass die Komponenten so an der Karkasse angebracht sind, dass sie zumindest teilweise unmittelbar mit der Reifenkarkasse in Kontakt stehen und beispielsweise nicht durch zusätzliche Gürtellagen oder, abgesehen von etwaigen dünnen haftvermittelnden Schichten, separate Gummischichten getrennt sind.

Grundsätzlich bevorzugt ist ein erfindungsgemäßer Fahrzeugluftreifen, zusätzlich umfassend eine außen am ersten Flankenbereich angeordnete erste Seitenwand und/oder eine außen am zweiten Flankenbereich angeordnete zweite Seitenwand.

Nach Einschätzung der Erfinder ist es insbesondere mit Blick auf das Gesamtgewicht des Fahrzeugluftreifens vorteilhaft, wenn das erste und zweite obere Verstärkungselement als separate Elemente ausgeführt werden, die jeweils in den Schulterbereichen, d.h. am Übergang zwischen Zentralbereich und den jeweiligen Flankenbereichen, angeordnet werden, wie es vorstehend beschrieben wird. Bevorzugt ist somit ein erfindungsgemäßer Fahrzeugluftreifen, wobei das erste obere Verstärkungselement und das zweite obere Verstärkungselement voneinander beabstandet sind.

Als leistungsfähige Alternative hierzu hat sich jedoch die Ausgestaltung erwiesen, in der das erste und zweite obere Verstärkungselement nicht separat ausgeführt werden, sondern durch eine einzige Verstärkungslage gebildet werden, die sich entsprechend aus dem ersten Flankenbereich durch den Zentralbereich hindurch bis in den zweiten Flankenbereich erstreckt. Hierdurch wird vorteilhafterweise insbesondere im Bereich unterhalb des Laufstreifens eine hohe Steifigkeit erreicht, die für bestimmte Anwendungen vorteilhaft sein kann. Ein entsprechender Aufbau ähnelt dabei im oberen Teil des Fahrzeugluftreifens einer Ausführungsform, wie es mit einer sogenannten 1/2-Karkasslage erhalten werden kann. Bevorzugt ist somit alternativ ein erfindungsgemäßer Fahrzeugluftreifen wobei das erste obere Verstärkungselement und das zweite obere Verstärkungselement durch eine Verstärkungslage gebildet werden, wobei sich die Verstärkungslage bevorzugt über den gesamten Zentralbereich in die Flankenbereiche erstreckt.

Es kann als Vorteil des erfindungsgemäßen Fahrzeugluftreifens angesehen werden, dass die Verstärkungselemente flexibel positioniert werden können, nämlich auf der Innen- und der Außenseite der Reifenkarkasse. In Übereinstimmung mit dem fachmännischen Verständnis bezeichnet der Ausdruck Innenseite hierbei die Seite der Reifenkarkasse, die ins Innere des ringförmigen Fahrzeugluftreifens, d. h. in Richtung des im Betrieb mit Luft gefüllten Hohlraums des Fahrzeugluftreifens, zeigt. Die Anbringung der Verstärkungselemente auf der Außenseite der Reifenkarkasse kann nach Einschätzung der Erfinder dahingehend vorteilhaft sein, dass diese in typischen Reifenaufbauverfahren leichter zu fertigen ist. Mit Blick auf die Schutzwirkung vor ungewollten mechanischen Schäden ist nach Einschätzung der Erfinder jedoch die Positionierung an der Innenseite der Reifenkarkasse bevorzugt. Bevorzugt ist vor diesem Hintergrund ein erfindungsgemäßer Fahrzeugluftreifen, wobei das erste obere Verstärkungselement und das zweite obere Verstärkungselement auf der Außen- oder Innenseite, bevorzugt auf der Innenseite, der Reifenkarkasse angeordnet sind, und/oder wobei das erste untere Verstärkungselement und das zweite untere Verstärkungselement auf der Außen- oder Innenseite, bevorzugt auf der Innenseite, der Reifenkarkasse angeordnet sind.

Basierend auf den Experimenten der Erfinder ist es besonders vorteilhaft, wenn die Verstärkungselemente jeweils auf der gleichen Seite der Reifenkarkasse angeordnet sind. Bevorzugt ist deshalb ein erfindungsgemäßer Fahrzeugluftreifen, wobei das erste obere Verstärkungselement sowie das erste untere Verstärkungselement und/oder das zweite obere Verstärkungselement sowie das zweite untere Verstärkungselement, bevorzugt sämtliche Verstärkungselemente, auf der gleichen Seite der Reifenkarkasse angeordnet sind.

Häufig umfassen moderne Fahrzeugluftreifen eine sogenannte Reifeninnenschicht, welche insbesondere der luftdichten Versiegelung des Reifens dient. Wenn eine solche Reifeninnenschicht vorgesehen ist, wird es als besonders vorteilhaft angesehen, die Verstärkungselemente zwischen der Reifeninnenschicht und der Reifenkarkasse anzuordnen. Es kann als besonderer Vorteil dieser Ausgestaltung gesehen werden, dass die Verstärkungselemente nicht nur eine erhöhte mechanische Stabilität und eine höhere Resistenz gegen "snake bites" ermöglichen, sondern zudem in den besonders belasteten Bereichen eine zusätzliche Dichtungsschicht für die Reifeninnenschicht darstellen, sodass eine ungewollte Perforation der Reifeninnenschicht durch die Verstärkungselemente zusätzlich verhindert wird. Bevorzugt ist deshalb ein erfindungsgemäßer Fahrzeugluftreifen, zusätzlich umfassend eine relativ zur Reifenkarkasse in radialer Richtung innenliegende Reifeninnenschicht, wobei das erste obere Verstärkungselement und/oder das erste untere Verstärkungselement und/oder das zweite obere Verstärkungselement und/oder das zweite untere Verstärkungselement, bevorzugt sämtliche Verstärkungselemente, zwischen der Reifenkarkasse und der Reifeninnenschicht angeordnet sind.

Die von den Erfindern identifizierte Lösung des Problems ist vorteilhafterweise hinsichtlich des übrigen Aufbaus des Fahrzeugluftreifens sehr flexibel, sodass auch der Einsatz von zusätzlichen Lagen, beispielsweise Gürtellagen zwischen der Reifenkarkasse und den Laufstreifen möglich ist, sodass die Eigenschaften des Fahrzeugluftreifens spezifisch eingestellt werden können, ohne die durch die Erfindung ermöglichten Vorteile nachteilig zu beeinflussen. Bevorzugt ist demgemäß ein erfindungsgemäßer Fahrzeugluftreifen, zusätzlich umfassend zwischen dem Laufstreifen und der Reifenkarkasse über dem Zentralbereich zumindest eine weitere Lage, bevorzugt genau eine weitere Lage, wobei die weitere Lage bevorzugt eine Gürtellage ist, wobei die weitere Lage besonders bevorzugt Lagen-Festigkeitsträger umfasst, die in einem Lagen-Gummiwerkstoff eingebettet sind, wobei die weitere Lage besonders bevorzugt mit dem ersten oberen Verstärkungselement und/oder dem zweiten oberen Verstärkungselement überlappt, oder wobei der Laufstreifen unmittelbar auf der radial außenliegenden Seite der Reifenkarkasse angeordnet ist.

Wie vorstehend erläutert, ist es in vielen Fällen üblich, dass die Reifenkarkasse um die Reifenwulst herum geschlagen wird, sodass sogenannte Umschlagbereiche entstehen, welche sich an die jeweiligen Wulstbereiche anschließen. Dies ist mit Blick auf die Stabilität des Fahrzeugluftreifens und die feste Fixierung an der Felge regelmäßig bevorzugt. Beim Vorliegen von Umschlagbereichen schlagen die Erfinder vor, dass die jeweiligen Kernfahnen vorteilhafterweise zweiteilig ausgeführt werden können. Bei einer im Wesentlichen gleichen Gesamtform der Kernfahne wird hierbei der Umschlagbereich quasi durch die Kernfahne hindurchgeführt, sodass diese durch den Umschlagbereich in zwei Bereiche geteilt wird. Ein Teil der Kernfahne ist dadurch zwischen dem Umschlagbereich und dem Wulstbereich der Reifenkarkasse angeordnet, wohingegen der zweite Teil der Kernfahne, welcher auch als "outer apex" bezeichnet wird, auf der Außenseite des Umschlagbereichs aufliegt. Hierdurch wird ein besonders vorteilhafter Aufbau realisiert, welcher besonders fest auf der Felge fixiert werden kann und welcher im Seitenbereich der Fahrzeugluftreifen über ausgezeichnete mechanische Eigenschaften bei gleichzeitig niedriger Geräuschentwicklung im Betrieb verfügt. Bevorzugt ist entsprechend ein erfindungsgemäßer Fahrzeugluftreifen, wobei die Reifenkarkasse zusätzlich einen mit dem ersten Wulstbereich verbundenen ersten Umschlagbereich und/oder einen mit dem zweiten Wulstbereich verbundenen zweiten Umschlagbereich umfasst, wobei der erste Umschlagbereich und/oder der zweite Umschlagbereich relativ zum jeweiligen Wulstbereich bevorzugt außen liegen. Erfindungsgemäß ist dabei ein erfindungsgemäßer Fahrzeugluftreifen, wobei die erste Kernfahne und/oder die zweite Kernfahne zweiteilig ausgeführt ist, wobei die erste Kernfahne teilweise zwischen dem ersten Wulstbereich und dem ersten Umschlagbereich sowie teilweise an der Außenseite des ersten Umschlagbereichs angeordnet ist und/oder wobei die zweite Kernfahne teilweise zwischen dem zweiten Wulstbereich und dem zweiten Umschlagbereich sowie teilweise an der Außenseite des zweiten Umschlagbereichs angeordnet ist.

Grundsätzlich ist es möglich, die umgeschlagenen Bereiche der Reifenkarkasse so lang auszuführen, dass die entstehenden Umschlagbereiche längs zum Wulstbereich und Flankenbereich der Reifenkarkasse, beispielsweise bis hinauf zum Laufstreifen, verlaufen. Mit Blick auf die im erfindungsgemäßen Fahrzeugluftreifen einzusetzenden Verstärkungselemente hat es sich jedoch als besonders vorteilhaft erwiesen, wenn die Höhe der Umschlagbereiche so gewählt wird, dass das Ende des Umschlagbereichs relativ zur Reifenkarkasse etwa auf der gleichen Höhe liegt, wie das jeweilige untere Verstärkungselement.

Bevorzugt ist somit ein erfindungsgemäßer Fahrzeugluftreifen, wobei sich der erste Umschlagbereich und/oder der zweite Umschlagbereich an der Seite der Reifenkarkasse so hoch erstrecken, dass das Ende des jeweiligen Umschlagbereichs im jeweiligen Flankenbereich auf Höhe des jeweiligen unteren Verstärkungselements angeordnet ist.

Mit Blick auf eine möglichst hohe Resistenz gegen Quetschungen der Seitenwand ist es prinzipiell eigentlich bevorzugt, mehrere Karkasslagen vorzusehen. Zur Lösung des vorstehend beschriebenen Zielkonflikts ist es jedoch explizit bevorzugt, wenn die Reifenkarkasse lediglich eine Karkasslage umfasst, da dies in Kombination mit den erfindungsgemäß einzusetzenden Verstärkungselementen eine gute Resistenz gegen mechanische Beschädigung beim Überrollen von Hindernissen bei gleichzeitig ausgezeichneten Geräuscheigenschaften ermöglicht. Im Stand der Technik wurde vorgeschlagen, dass die eine oder eine von mehreren Karkasslagen unterhalb des Laufstreifens mit einer Unterbrechung vorgesehen werden kann, was für spezifische Anwendungen vorteilhaft sein mag. Mit Blick auf die erfindungsgemäßen Fahrzeugluftreifen ist es jedoch explizit bevorzugt, wenn es sich bei der zumindest einen bzw. sogar bei sämtlichen Karkasslagen um durchgehende Karkasslagen handelt, d. h. über Karkasslagen, welche nicht unterbrochen sind. Bevorzugt ist deshalb ein erfindungsgemäßer Fahrzeugluftreifen, wobei die Reifenkarkasse eine oder mehrere Karkasslagen, bevorzugt genau eine Karkasslage, umfasst, und/oder wobei sich zumindest eine Karkasslage, bevorzugt sämtliche Karkasslagen, als durchgehende Karkasslage durch alle Bereiche der Reifenkarkasse erstreckt.

Grundsätzlich sind die erfindungsgemäßen Fahrzeugluftreifen hinsichtlich des Aufbaus der Reifenkarkasse sehr flexibel. Es ist jedoch explizit bevorzugt, wenn die Karkasslagen Festigkeitsträger umfassen, die in einem Gummiwerkstoff eingebettet sind. Bevorzugt ist insoweit ein erfindungsgemäßer Fahrzeugluftreifen, wobei die eine oder die mehreren Karkasslagen eine Vielzahl von Karkassen- Festigkeitsträgern umfassen, die in einem Karkassen-Gummiwerkstoff eingebettet sind.

Den Erfindern der vorliegenden Erfindung ist es insoweit gelungen, Festigkeitsträger und Gummiwerkstoffe zu identifizieren, mit denen sich in erfindungsgemäßen Fahrzeugluftreifen leistungsfähige Reifenkarkassen erhalten lassen. Bevorzugt ist nämlich ein erfindungsgemäßer Fahrzeugluftreifen, wobei die Karkassen-Festigkeitsträger ausgewählt sind aus der Gruppe bestehend aus metallischen und textilen Festigkeitsträgern, bevorzugt textilen Festigkeitsträgern, besonders bevorzugt textilen Festigkeitsträgern mit zumindest einem Garn, wobei das Garn aus einem Material besteht, welches ausgewählt ist aus der Gruppe bestehend aus Aramid, Polyethylenterephthalat, Polyetherketon, Polyketon, Polyethylennaphtalat, Rayon, Viskose, Kohlefasern, Naturfasern, Glasfasern und PBO (Poly(p-phenylen-2,6-benzobisoxazol)), ganz besonders bevorzugt ausgewählt ist aus der Gruppe bestehend aus Aramid und Polyethylenterephthalat. Bevorzugt ist auch ein erfindungsgemäßer Fahrzeugluftreifen, wobei der Karkassen-Gummiwerkstoff herstellbar ist durch Vulkanisation einer vulkanisierbaren Karkassen-Kautschukmischung, wobei die vulkanisierbare Karkassen-Kautschukmischung bevorzugt zumindest einen Dienkautschuk und zumindest einen Füllstoff umfasst.

In vielen Fällen verfügen Fahrzeugluftreifen in der Wulst über sogenannte Wulstkerne. Das Vorliegen von Wulstkernen ist auf für die erfindungsgemäßen Fahrzeugluftreifen stark bevorzugt, wobei diese im Rahmen der vorliegenden Erfindung der ersten bzw. zweiten Kernfahne zugewiesen werden, die die Wulstkerne umfassen kann. Bevorzugt ist folglich ein erfindungsgemäßer Fahrzeugluftreifen, wobei die erste Kernfahne und/oder die zweite Kernfahne einen Wulstkern umfasst, wobei der Wulstkern bevorzugt ein hexagonaler Kern ist.

Nach Einschätzung der Erfinder ist es besonders vorteilhaft, wenn die Kernfahne aus einem Gummiwerkstoff ausgebildet wird, welcher eine höhere Steifigkeit und daher einen höheren E-Modul aufweist als die Gummiwerkstoffe der Verstärkungselemente. Bevorzugt ist insoweit zunächst ein erfindungsgemäßer Fahrzeugluftreifen, wobei die erste Kernfahne und/oder die zweite Kernfahne einen Kernfahnen-Gummiwerkstoff umfassen. Bevorzugt ist dabei ein erfindungsgemäßer Fahrzeugluftreifen, wobei der Kernfahnen-Gummiwerkstoff herstellbar ist durch Vulkanisation einer vulkanisierbaren Kernfahnen-Kautschukmischung, wobei die vulkanisierbare Kernfahnen-Kautschukmischung bevorzugt zumindest einen Dienkautschuk und zumindest einen Füllstoff umfasst. Besonders bevorzugt ist ein erfindungsgemäßer Fahrzeugluftreifen, wobei der Kernfahnen-Gummiwerkstoff einen höheren E-Modul aufweist, als der Karkassen-Gummiwerkstoff, wobei der Kernfahnen-Gummiwerkstoff bevorzugt einen höheren E-Modul aufweist als die Gummiwerkstoffe der Verstärkungselemente. Im Rahmen der vorliegenden Erfindung bezeichnet der Ausdruck E-Modul den mittleren dynamischen Speichermodul E', welcher für Gummiwerkstoffe aus einer dynamischmechanischen Messung bei 55 °C gemäß DIN 53513:1990-03 ermittelt wird, wobei der mittlere dynamische Speichermodul E' der Mittelwert aus zwei Messungen bei 0,15 % Dehnung und 8 % Dehnung ist.

Die Erfinder haben erkannt, dass die erfindungsgemäß einzusetzenden Verstärkungselemente vorteilhafterweise besonders dünn ausgeführt werden können, ohne die vorteilhafte Wirkung auf die Seitenwandrobustheit zu verlieren, was insbesondere für das Gesamtgewicht und den Rollwiderstand günstig ist. Bevorzugt ist daher ein erfindungsgemäßer Fahrzeugluftreifen, wobei das erste obere Verstärkungselement und/oder das erste untere Verstärkungselement und/oder das zweite obere Verstärkungselement und/oder das zweite untere Verstärkungselement, bevorzugt sämtliche Verstärkungselemente, eine Dicke im Bereich von 0,2 bis 4,0 mm, bevorzugt im Bereich von 0,5 bis 2,5 mm, besonders bevorzugt im Bereich von 0,9 bis 1,8 mm, aufweisen.

Auch wenn es grundsätzlich zumindest theoretisch möglich wäre als Verstärkungselemente verschiedene Materialien einzusetzen, beispielsweise metallische Verstärkungselemente, ist es mit Blick auf die Leistungsfähigkeit und die Verarbeitungseigenschaften der erfindungsgemäßen Fahrzeugluftreifen für alle Ausführungsformen uneingeschränkt bevorzugt, wenn die Verstärkungselemente zumindest teilweise, bevorzugt im Wesentlichen vollständig, aus einem Gummiwerkstoff bestehen. Bevorzugt ist entsprechend ein erfindungsgemäßer Fahrzeugluftreifen, wobei das erste obere Verstärkungselement einen ersten Gummiwerkstoff umfasst, und/oder wobei das zweite obere Verstärkungselement einen zweiten Gummiwerkstoff umfasst, und/oder wobei das erste untere Verstärkungselement einen dritten Gummiwerkstoff umfasst, und/oder wobei das zweite untere Verstärkungselement einen vierten Gummiwerkstoff umfasst. Bevorzugt ist auch ein erfindungsgemäßer Fahrzeugluftreifen, wobei der erste Gummiwerkstoff und/oder der zweite Gummiwerkstoff und/oder der dritte Gummiwerkstoff und/oder der vierte Gummiwerkstoff, bevorzugt sämtliche Gummiwerkstoffe, herstellbar ist durch Vulkanisation einer entsprechenden vulkanisierbaren Kautschukmischung, wobei die entsprechende vulkanisierbare Kautschukmischung bevorzugt zumindest einen Dienkautschuk und zumindest einen Füllstoff umfasst.

Insoweit hat es sich als Vorteil der erfindungsgemäßen Fahrzeugluftreifen erwiesen, dass die Verstärkungselemente zu Gewährleistung einer einfachen Herstellbarkeit aus dem gleichen Gummiwerkstoff gefertigt werden können. Bevorzugt ist entsprechend ein erfindungsgemäßer Fahrzeugluftreifen, wobei der erste Gummiwerkstoff sowie der zweite Gummiwerkstoff und/oder der dritte Gummiwerkstoff sowie der vierte Gummiwerkstoff, bevorzugt sämtliche Gummiwerkstoffe, identisch sind,
Nach Einschätzung der Erfinder ist es zur Gewährleistung einer höchstmöglichen Seitenwandrobustheit und einer optimierten Beständigkeit gegen mechanische Belastung bei dem Überrollen von Hindernissen ganz besonders bevorzugt, wenn die Verstärkungselemente aus Gummiwerkstoffen ausgebildet werden, welche eine höhere Steifigkeit aufweisen als der in der Karkasse eingesetzte Gummiwerkstoff. Bevorzugt ist folglich ein erfindungsgemäßer Fahrzeugluftreifen wobei der erste Gummiwerkstoff und/oder der zweite Gummiwerkstoff und/oder der dritte Gummiwerkstoff und/oder der vierte Gummiwerkstoff, bevorzugt sämtliche Gummiwerkstoffe, einen höheren E-Modul aufweist, als der Karkassen-Gummiwerkstoff.

Neben solchen Verstärkungselementen, welche vollständig aus Gummiwerkstoff ausgebildet sind, sind solche Verstärkungselemente bevorzugt, die eine Vielzahl an Festigkeitsträgern umfassen, welche in den entsprechenden Gummiwerkstoffen eingebettet sind, wobei vorteilhafterweise die gleichen Materialien eingesetzt werden können wie bei den Festigkeitsträgern der Reifenkarkasse. Bevorzugt ist demnach ein erfindungsgemäßer Fahrzeugluftreifen, wobei das erste obere Verstärkungselement eine Vielzahl an ersten Festigkeitsträgern umfasst, und/oder wobei das zweite obere Verstärkungselement eine Vielzahl an zweiten Festigkeitsträgern umfasst, und/oder wobei das erste untere Verstärkungselement eine Vielzahl an dritten Festigkeitsträgern umfasst, und/oder wobei das zweite untere Verstärkungselement eine Vielzahl an vierten Festigkeitsträgern umfasst. Bevorzugt ist dabei ein erfindungsgemäßer Fahrzeugluftreifen, wobei die ersten Festigkeitsträger und/oder zweiten Festigkeitsträger und/oder dritten Festigkeitsträger und/oder vierten Festigkeitsträger, bevorzugt sämtliche dieser Festigkeitsträger, ausgewählt sind aus der Gruppe bestehend aus metallischen und textilen Festigkeitsträgern, bevorzugt textilen Festigkeitsträgern, besonders bevorzugt textilen Festigkeitsträgern mit zumindest einem Garn, wobei das Garn aus einem Material besteht, welches ausgewählt ist aus der Gruppe bestehend aus Aramid, Polyethylenterephthalat, Polyetherketon, Polyketon, Polyethylennaphtalat, Rayon, Viskose, Kohlefasern, Naturfasern, Glasfasern und PBO (Poly(p-phenylen-2,6-benzobisoxazol)), ganz besonders bevorzugt ausgewählt ist aus der Gruppe bestehend aus Aramid und Polyethylenterephthalat.

Zum Erreichen von optimalen Reifeneigenschaften, insbesondere einer vorteilhaften Seitenwandrobustheit bei gleichzeitig vorteilhaftem Geräuschverhalten ist es nach Erkenntnis der Erfinder jedoch explizit bevorzugt, wenn in den Verstärkungselementen andere Festigkeitsträger eingesetzt werden als in der Reifenkarkasse, wobei beispielsweise der Einsatz von Aramid in den Verstärkungselementen zu ausgezeichneten Ergebnissen führt. Zusätzlich oder alternativ ist es auch bevorzug, wenn sich die Festigkeitsträger der unteren Verstärkungselemente von denen der oberen Verstärkungselemente unterscheiden. Diese vorteilhafte Ausgestaltung ermöglicht es besonders gut, die Seitenwandeigenschaften der Fahrzeugluftreifen an die spezifischen Erfordernisse einzustellen, beispielsweise indem bei den unteren Verstärkungselementen steifere Festigkeitsträger eingesetzt werden, wohingegen der Schwerpunkt bei den oberen Verstärkungselementen auf Flexibilität gelegt wird. Bevorzugt ist folglich ein erfindungsgemäßer Fahrzeugluftreifen, wobei die ersten Festigkeitsträger und/oder zweiten Festigkeitsträger und/oder dritten Festigkeitsträger und/oder vierten Festigkeitsträger, bevorzugt die dritten Festigkeitsträger und vierten Festigkeitsträger, besonders bevorzugt sämtliche dieser Festigkeitsträger, von den Karkassen-Festigkeitsträger verschieden sind, bevorzugt hinsichtlich des Materials und/der der Feinheit. Bevorzugt ist ebenfalls ein erfindungsgemäßer Fahrzeugluftreifen wobei die ersten Festigkeitsträger und die zweiten Festigkeitsträger von den dritten Festigkeitsträgern und den vierten Festigkeitsträger verschieden sind.

Die Erfinder der vorliegenden Erfindung haben überraschend gefunden, dass sich bei Verstärkungselementen, welche Festigkeitsträger umfassen, ein besonders vorteilhafter Effekt erzielen lässt, wenn die Ausrichtung der Festigkeitsträger in den Verstärkungselementen nicht der Ausrichtung der Karkassen-Festigkeitsträgern entspricht, beispielsweise wenn die Festigkeitsträger in den Verstärkungselementen in traditionellen Radialreifen (Kordwinkel ca 90°) selbst Kordwinkel aufweisen, welche sich von 90 Grad unterscheiden. Hierdurch entsteht in der Draufsicht auf die Lagen an Festigkeitsträgern ein Kreuzgewebe, wodurch eine besonders hohe Stabilität in den Bereichen der Verstärkungselemente realisiert werden kann. Bevorzugt ist demnach ein erfindungsgemäßer Fahrzeugluftreifen, wobei die Festigkeitsträger im ersten oberen Verstärkungselement und/oder im ersten unteren Verstärkungselement und/oder im zweiten oberen Verstärkungselement und/oder im zweite unteren Verstärkungselement, bevorzugt die Festigkeitsträger im ersten unteren Verstärkungselement und im zweiten unteren Verstärkungselement, einen Kordwinkel im Bereich von 30° bis 90°, bevorzugt 70° bis 86°, relativ zur Umfangsrichtung aufweisen, und/oder wobei die Festigkeitsträger im ersten oberen Verstärkungselement und/oder im ersten unteren Verstärkungselement und/oder im zweiten oberen Verstärkungselement und/oder im zweite unteren Verstärkungselement, bevorzugt die Festigkeitsträger im ersten unteren Verstärkungselement und im zweiten unteren Verstärkungselement, einen Kordwinkel relativ zur Umfangsrichtung aufweisen, der sich vom Kordwinkel der Karkassen-Festigkeitsträger in der Reifenkarkasse unterscheidet. Von 90° abweichende Kordwinkel in den Verstärkungselementen führen in Kombination mit einer Karkasslage mit einem gegenläufigen, d.h. ebenfalls von 90° abweichenden Kordwinkel, der Karkassen-Festigkeitsträger, zu besonders hoher Stabilität im Bereich der Verstärkungselemente. Bevorzugt ist dabei, wenn die Karkassen-Festigkeitsträger relativ zur Umlaufrichtung einen Kordwinkel von etwa 82° aufweisen und die Festigkeitsträger in den Verstärkungselementen relativ zur Umlaufrichtung einen Kordwinkel von etwa 82° aufweisen, wobei die Steigung der Festigkeitsträger jedoch ein anderes Vorzeichen aufweist, so dass die Festigkeitsträger in den Verstärkungselementen mit den Karkassen-Festigkeitsträgern einen in Umfangsrichtung weisenden Winkel von etwa 164° einschließen.

Nach Einschätzung der Erfinder kann und sollte die Position der unteren Verstärkungselemente vorteilhafterweise auf die übrige Konstruktion des Fahrzeugluftreifens abgestimmt werden, nämlich dadurch, dass die relative Position an der Reifenkarkasse, d. h. die Höhe der unteren Verstärkungselemente, angepasst wird. Für einige Anwendungen kann es dabei bevorzugt sein, wenn die unteren Verstärkungselemente ausschließlich in den jeweiligen Wulstbereichen angeordnet sind, d. h. sich nicht in die Flankenbereiche erstrecken und somit im Wesentlichen spätestens auf der gleichen Höhe enden, wie die Kernfahnen. Nach Einschätzung der Erfinder ist es jedoch für die überwiegende Zahl von Anwendungen vorteilhaft, wenn sich die unteren Verstärkungselemente aus dem Wulstbereich kommend über das Ende der Kernfahnen hinaus in den Flankenbereich erstrecken, da dieser Bereich in vielen Fällen eine besonders hohe mechanische Belastung erfährt und die zusätzliche Verstärkung durch die unteren Verstärkungselemente eine besonders effiziente Steigerung der Haltbarkeit ermöglicht. Mit Blick auf eine optimierte Geräuschentwicklung schlagen die Erfinder jedoch vor, dass sich die unteren Verstärkungselemente auch nicht zu weit in den Flankenbereich der Reifenkarkasse erstrecken sollten, sodass es vorteilhaft ist, wenn ein Großteil der Verstärkungselemente im Wulstbereich an der Reifenkarkasse angeordnet ist. Bevorzugt ist in diesem Lichte ein erfindungsgemäßer Fahrzeugluftreifen, wobei das erste untere Verstärkungselement und/oder das zweite untere Verstärkungselement, bevorzugt beide unteren Verstärkungselemente, vollständig am jeweiligen Wulstbereich angeordnet sind. Bevorzugt ist alternativ ein erfindungsgemäßer Fahrzeugluftreifen wobei das erste untere Verstärkungselement und/oder das zweite untere Verstärkungselement, bevorzugt beide unteren Verstärkungselemente, jeweils im entsprechenden Flankenbereich und im entsprechenden Wulstbereich angeordnet sind, wobei das erste untere Verstärkungselement und/oder das zweite untere Verstärkungselement besonders bevorzugt zu 5 bis 50 %, bevorzugt zu 10 bis 40 %, besonders bevorzugt zu 15 bis 30 %, im jeweiligen Flankenbereich angeordnet sind, bezogen auf die jeweilige Breite des Verstärkungselements.

Den Erfindern der vorliegenden Erfindung ist es vorteilhafterweise gelungen, für die Verstärkungselemente geeignete Breiten anzugeben, d. h. für die Ausdehnung entlang des Verlaufs der Reifenkarkasse im Querschnitt. Bevorzugt ist nämlich ein erfindungsgemäßer Fahrzeugluftreifen, wobei das erste untere Verstärkungselement und/oder das zweite untere Verstärkungselement, bevorzugt beide unteren Verstärkungselemente, eine Breite im Bereich von 20 bis 100 mm, bevorzugt im Bereich von 30 bis 80 mm, besonders bevorzugt im Bereich von 40 bis 60 mm, aufweisen und/oder wobei das erste obere Verstärkungselement und/oder das zweite obere Verstärkungselement, bevorzugt beide oberen Verstärkungselemente, eine Breite im Bereich von 20 bis 100 mm, bevorzugt im Bereich von 30 bis 80 mm, besonders bevorzugt im Bereich von 40 bis 60 mm, aufweisen.

Über die vorstehend angegebenen Dimensionen hinaus ist es den Erfindern zudem gelungen, besonders zweckmäßige Abstände zwischen den oberen und unteren Verstärkungselementen anzugeben und zwar sowohl absolut sowie auch in Relation zu der Länge der unteren Verstärkungselemente, was sich in der Praxis häufig als zielführende Bezugsgröße erwiesen hat. Bevorzugt ist insbesondere ein erfindungsgemäßer Fahrzeugluftreifen, wobei das erste obere Verstärkungselement und das erste untere Verstärkungselement und/oder das zweite obere Verstärkungselement und das zweite untere Verstärkungselement, entlang der Reifenkarkasse zueinander einen Abstand im Bereich von 0,1 bis 50 mm, bevorzugt im Bereich von 1 bis 40 mm, besonders bevorzugt im Bereich von 5 bis 30 mm, ganz besonders bevorzugt im Bereich von 10 bis 20 mm, aufweisen, und/oder wobei das erste obere Verstärkungselement und das erste untere Verstärkungselement und/oder das zweite obere Verstärkungselement und das zweite untere Verstärkungselement, entlang der Reifenkarkasse zueinander einen Abstand aufweisen, der im Bereich von 10 bis 90 %, bevorzugt 20 bis 80 %, besonders bevorzugt 30 bis 70 %, ganz besonders bevorzugt 40 bis 60 %, der Breite des jeweiligen unteren Verstärkungselements beträgt.

Eine mit Blick auf die optimale Seitenwandrobustheit besonders vorteilhafte Ausgestaltung ergibt sich jedoch dann, wenn ein oberes Verstärkungselement und das zugehörige untere Verstärkungselement auf unterschiedlichen Seiten der Reifenkarkasse angeordnet werden, sich jedoch jeweils so weit entlang der Reifenkarkasse in den Seitenbereichen erstrecken, dass es quasi zu einer Überlappung kommt und die Beabstandung zwischen dem oberen und dem unteren Verstärkungselement in einem Teilabschnitt der Reifenkarkasse lediglich noch durch die Reifenkarkasse selbst gewährleistet wird. Dieser Überlapp beeinflusst überraschenderweise die Geräuschentwicklung nicht übermäßig nachteilig, erzeugt jedoch einen besonders dicken mehrlagigen Verbund im entsprechenden Teilabschnitt, sodass lokal eine besonders hohe mechanische Stabilität erreicht werden kann. Bevorzugt ist deshalb ein erfindungsgemäßer Fahrzeugluftreifen, wobei das erste obere Verstärkungselement und das erste untere Verstärkungselement und/oder das zweite obere Verstärkungselement und das zweite untere Verstärkungselement auf unterschiedlichen Seiten der Reifenkarkasse angeordnet sind und beide mit dem gleichen Teilabschnitt der Reifenkarkasse in Kontakt stehen.

Analog zu der vorstehend identifizierten vorteilhaften Anordnung der unteren Verstärkungselemente ist es den Erfindern auch gelungen, für die oberen Verstärkungselemente günstige Positionierungen anzugeben, wobei es nach Einschätzung der Erfinder tendenziell vorteilhafter ist, wenn die oberen Verstärkungselemente nicht zu weit in die Flankenbereiche hineinragen. Bevorzugt ist nämlich ein erfindungsgemäßer Fahrzeugluftreifen, wobei das erste obere Verstärkungselement und/oder das zweite obere Verstärkungselement zu 10 bis 70 %, bevorzugt zu 20 bis 60 %, besonders bevorzugt zu 30 bis 50 %, im jeweiligen Flankenbereich angeordnet sind, bezogen auf die jeweilige Breite des Verstärkungselements, und/oder wobei das erste obere Verstärkungselement und/oder das zweite obere Verstärkungselement zu 30 bis 90 %, bevorzugt zu 40 bis 80 %, besonders bevorzugt zu 50 bis 70 %, im Zentralbereich angeordnet sind, bezogen auf die jeweilige Breite des Verstärkungselements.

Nachfolgend werden Ausführungsformen unter Bezugnahme auf die beiliegenden Figuren näher erläutert und beschrieben. Dabei zeigen:
- Fig. 1: eine hochgradig schematische Darstellung eines beispielhaften Fahrzeugluftreifens gemäß dem Stand der Technik, mit der Visualisierung der verschiedenen Bereiche der Reifenkarkasse;
- Fig. 2: einen ersten Satz an schematischen Darstellungen einer Seitenwand eines Fahrzeugluftreifens in verschiedenen Ausführungsformen, wobei nur die dritte und vierte Darstellung erfindungsgemäß ist.
- Fig. 3: einen zweiten Satz an schematischen Darstellungen einer Seitenwand eines Fahrzeugluftreifens in verschiedenen Ausführungsformen;
- Fig. 4: einen dritten Satz an schematischen Darstellungen einer Seitenwand eines Fahrzeugluftreifens in verschiedenen Ausführungsformen;
- Fig. 5: eine hochgradig schematische Darstellung eines Fahrzeugluftreifens in einer ersten Ausführungsform;
- Fig. 6: eine hochgradig schematische Darstellung eines Fahrzeugluftreifens in einer zweiten Ausführungsform;

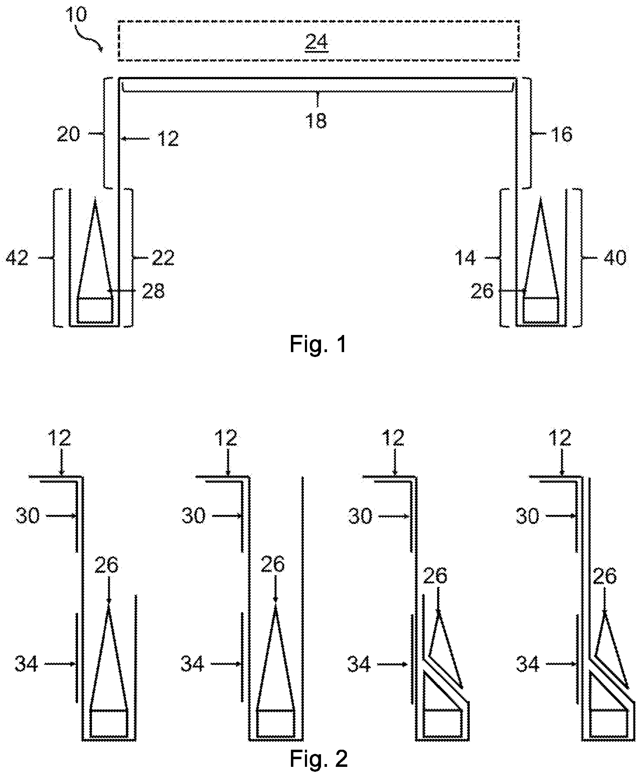

Fig. 1 zeigt eine abstrahierte Darstellung eines Fahrzeugluftreifens 10, wie er aus dem Stand der Technik bekannt ist und dient insbesondere zur Visualisierung der verschiedenen Bereiche der Reifenkarkasse 12. Der Fahrzeugluftreifen 10 umfasst neben der Reifenkarkasse 12 einen Laufstreifen 24 mit dem radial darunterliegenden Gürtelpaket, welches bevorzugt von einer rundführenden Bandage abgedeckt wird (nicht gezeigt). Unter dem Laufstreifen 24 erstreckt sich der Zentralbereich 18, der vom ersten Flankenbereich 16 und vom zweiten Flankenbereich 20 eingerahmt wird, die sich an der Seite des Fahrzeugluftreifens erstrecken und die jeweils im Übergang zum Zentralbereich 18 die Reifenschultern ausbilden. An diese Flankenbereiche schließt sich auf beiden Seiten der erste Wulstbereich 14 bzw. der zweite Wulstbereich 22 an, an denen die erste Kernfahne 26 bzw. die zweite Kernfahne 28 angeordnet sind. Die Reifenkarkasse 12 ist um die jeweiligen Kernfahnen herumgeschlagen und bildet auf den Seiten der Reifenkarkasse 12 den ersten Umschlagbereich 40 und den zweiten Umschlagbereich 42 (wobei der Versatz zwischen den Wulstbereichen und den Umschlagbereichen unterhalb der Kernfahne der Darstellungsform geschuldet ist und in der Praxis nicht auftritt bzw. eine vernachlässigbare Breite hat).

Fig. 2 zeigt schematisch einen ersten Satz von beispielhaften Konstruktionen der Seitenwände eines Fahrzeugluftreifens 10, wobei jeweils nur eine Seite der Reifenkarkasse 12 gezeigt ist. In Fig. 2 sind das erste obere Verstärkungselement 30 und das erste untere Verstärkungselement 34 in allen vier dargestellten Ausführungsformen an der gleichen Stelle platziert, wobei jedoch der erste Umschlagbereich 40 und die erste Kernfahne 26 unterschiedlich ausgeführt werden. Die erste und dritte Darstellung der Fig. 2 weisen dabei einen im Vergleich zu der zweiten und vierten Darstellung kürzeren ersten Umschlagbereich 40 auf. Die dritte und vierte Darstellung der Fig. 2 zeigen eine erfindungsgemäße mehrteilige erste Kernfahne 26, sodass ein Teil der ersten Kernfahne 26 vollständig von der Reifenkarkasse 12 ummantelt ist, wohingegen sich der zweite Teil der ersten Kernfahne 26 als sogenannter "outer apex" an der Außenseite an die umgeschlagene Reifenkarkasse 12 anschmiegt.

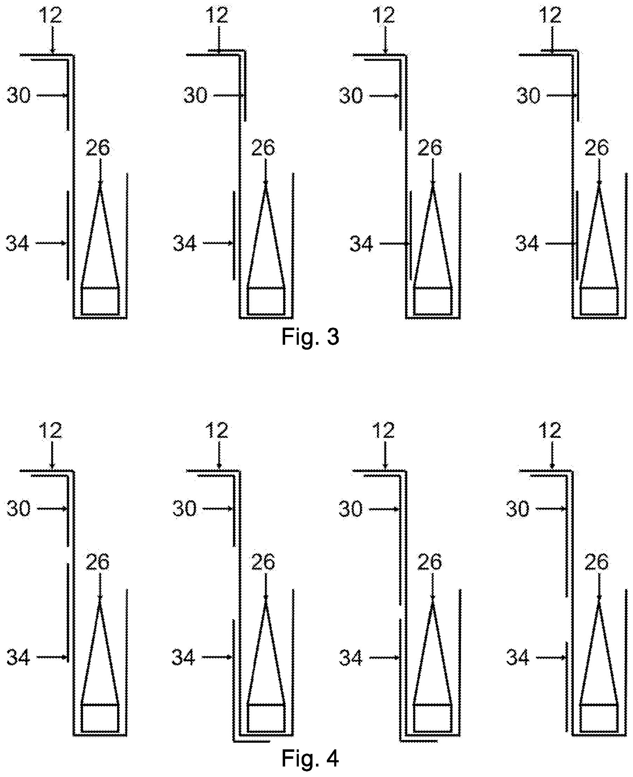

Fig. 3 zeigt schematisch einen zweiten Satz von beispielhaften Konstruktionen der Seitenwände eines Fahrzeugluftreifens 10. In den gezeigten Ausführungsformen variiert die Positionierung der Verstärkungselemente, wobei die vier möglichen Permutationen der Anordnung relativ zur Karkasse gezeigt werden. Fig. 4 zeigt schematisch einen zweiten Satz von beispielhaften Konstruktionen der Seitenwände eines Fahrzeugluftreifens 10, wobei jeweils die Position und die Breite der Verstärkungselemente variiert wird.

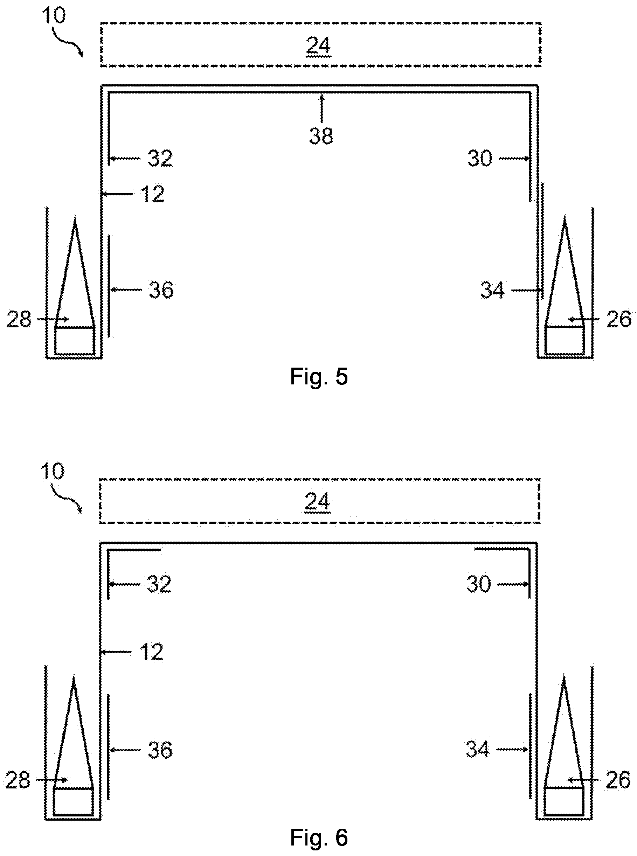

Fig. 5 zeigt eine abstrakte Darstellung eines Fahrzeugluftreifens 10 in einer ersten Ausführungsform. Gegenüber der Darstellung in der Fig. 1 umfasst der Fahrzeugluftreifen 10 ein erstes oberes Verstärkungselement 30 und ein zweites oberes Verstärkungselement 32, welche in der gezeigten Ausführungsform durch eine gemeinsame Verstärkungslage 38 ausgebildet werden, die sich unter der Reifenkarkasse 12 erstreckt. Das erste untere Verstärkungselement 34 ist in einer bespielhaften Gestaltung der Außenwand auf der Außenseite der Reifenkarkasse 12 im ersten Wulstbereich 14 angeordnet und erstreckt sich in den ersten Flankenbereich 16, sodass es in einem Teilabschnitt des ersten Flankenbereichs 16 zu einer Überlappung mit dem ersten oberen Verstärkungselement 30 kommt und sich lokal ein dreilagiger Verbund aus erstem oberen Verstärkungselement 30, der Reifenkarkasse 12 und dem ersten unteren Verstärkungselement 34 ergibt. In einer alternativen Ausgestaltung auf der linken Seite des Fahrzeugluftreifens 10 ist das zweite untere Verstärkungselement 36 in Fig. 5 vollständig im zweiten Wulstbereich 22 angeordnet und überragt entsprechend nicht das Ende der zweiten Kernfahne 28.

Fig. 6 zeigt abschließend eine abstrakte Darstellung eines Fahrzeugluftreifens 10 in einer zweiten Ausführungsform, welche nach Einschätzung der Erfinder besonders vorteilhaft ist. An der Reifenkarkasse 12 sind in den beiden Wulstbereichen eine erste Kernfahne 26 und eine zweite Kernfahne 28 angeordnet. Der Fahrzeugluftreifen 10 umfasst einen Laufstreifen 24, mit dem entsprechenden Gürtel- und/oder Bandagenpaket, unter dem sich der Zentralbereich 18 der Reifenkarkasse 12 erstreckt. Der Fahrzeugluftreifen 10 umfasst ein erstes oberes Verstärkungselement 30 und ein zweites oberes Verstärkungselement 32, die sich jeweils aus dem Zentralbereich 18 in den ersten Flankenbereich 16 bzw. den zweiten Flankenbereich 20 erstrecken. Von den oberen Verstärkungselementen beabstandet umfasst der Fahrzeugluftreifen 10 ein erstes unteres Verstärkungselement 34 und ein zweites unteren Verstärkungselement 36, die jeweils vollständig im jeweiligen Wulstbereich angeordnet sind. Bei dem beispielhaften Fahrzeugluftreifen 10 handelt es sich um einen PKW-Reifen, der einen Laufstreifen 24 aus einem Gummiwerkstoff umfasst, welcher an der von der Reifenkarkasse 12 abgewandten Außenseite ein Profil aufweist, wie es beispielsweise für Winterreifen geeignet ist.

Es ist deutlich zu erkennen, dass sämtliche Verstärkungselemente auf der Innenseite der Reifenkarkasse 12 angeordnet sind und dass die oberen Verstärkungselemente als separate Verstärkungselemente ausgebildet sind, die voneinander beabstandet sind. Der dargestellte Fahrzeugluftreifen 10 verfügt über eine Reifeninnenschicht (nicht gezeigt) unter der die Verstärkungselemente so angeordnet sind, dass diese zwischen der Reifeninnenschicht und der Reifenkarkasse 12 angeordnet sind. In der beispielhaften Ausführungsform der Fig. 6 umfasst der Fahrzeugluftreifen 10 keine zusätzlichen Gürtellagen, sodass der Laufstreifen 24 unmittelbar auf der radial außenliegenden Seite der Reifenkarkasse 12 angeordnet ist. Die erste Kernfahne 26 und die zweite Kernfahne 28 umfassen jeweils den gleichen Gummiwerkstoff, welcher einen höheren E-Modul aufweist als der Gummiwerkstoff, welcher in der Reifenkarkasse 12 oder den Verstärkungselementen verarbeitet ist. Zusätzlich umfassen beide Kernfahnen jeweils einen Wulstkern, welcher im unteren Ende der jeweiligen Kernfahne angeordnet ist und durch das Rechteck kenntlich gemacht wird.

Die Reifenkarkasse 12 im Fahrzeugluftreifen 10 umfasst genau eine durchgehende Karkasslage, die sich durch alle Bereiche der Reifenkarkasse 12 erstreckt. Diese Karkasslage umfasst eine Vielzahl von Festigkeitsträgern, die in einem Karkassen-Gummiwerkstoff eingebettet sind. In der beispielhaften Ausführungsform der Fig. 6 handelt es sich bei den Karkassen-Festigkeitsträgern um metallische Festigkeitsträger, nämlich um Verstärkungskorde aus Stahl. Die Verstärkungselemente weisen in dem dargestellten Beispiel eine Dicke von 1,1 mm auf und umfassen jeweils den gleichen Gummiwerkstoff, dessen E-Modul über dem Gummiwerkstoff liegt, welcher in der Reifenkarkasse 12 verarbeitet ist.

Sämtliche der Verstärkungselemente umfassen in Fig. 7 zudem Festigkeitsträger, die in dem gezeigten Beispiel als textile Festigkeitsträger aus Aramid ausgeführt sind und welche jeweils einen Kordwinkel relativ zur Umfangsrichtung aufweisen, der sich vom Kordwinkel der Karkassen-Festigkeitsträger in der Reifenkarkasse 12 unterscheiden. In dem gezeigten Beispiel weisen sämtliche Verstärkungselemente die gleiche Breite auf, die in der dargestellten Ausführungsform etwa 50 mm beträgt. Die nicht maßstabsgetreue Darstellung stellt den Abstand zwischen den Verstärkungselementen dabei zu ausgeprägt dar, da dieser in einem als besonders vorteilhaft erachteten beispielhaften Fahrzeugluftreifen 10 bei etwa 15 mm liegen sollte. Maßstabsgetreu abgebildet ist jedoch, dass die oberen Verstärkungselemente jeweils zu mehr als 50 % im Zentralbereich angeordnet sind.

### Bezugszeichenliste

- 10: Fahrzeugluftreifen
- 12: Reifenkarkasse
- 14: Erster Wulstbereich
- 16: Erster Flankenbereich
- 18: Zentralbereich
- 20: Zweiter Flankenbereich
- 22: Zweiter Wulstbereich
- 24: Laufstreifen
- 26: Erste Kernfahne
- 28: Zweite Kernfahne
- 30: Erstes oberes Verstärkungselement
- 32: Zweites oberes Verstärkungselement
- 34: Erstes unteres Verstärkungselement
- 36: Zweites unteres Verstärkungselement
- 38: Verstärkungslage
- 40: Erster Umschlagbereich
- 42: Zweiter Umschlagbereich

## Patentansprüche

1. Fahrzeugluftreifen (10), umfassend:
a) eine Reifenkarkasse (12) mit einem ersten Wulstbereich (14), einem ersten Flankenbereich (16), einem Zentralbereich (18), einem zweiten Flankenbereich (20) und einem zweiten Wulstbereich (22),
b) eine am ersten Wulstbereich (14) angeordnete erste Kernfahne (26) und eine am zweiten Wulstbereich (22) angeordnete zweite Kernfahne (28),
c) die Reifenkarkasse (12) ist um die jeweiligen Kernfahren (26, 28) herumgeschlagen und bildet auf den Seiten der Reifenkarkasse (12) den ersten Umschlagsbereich (40) und den zweiten Umschlagsbereich (42),
d) einen relativ zur Reifenkarkasse (12) in radialer Richtung außenliegenden und über dem Zentralbereich angeordneten Laufstreifen (24),
e) ein am Zentralbereich (18) und am ersten Flankenbereich (16) angeordnetes erstes oberes Verstärkungselement (30) und ein am Zentralbereich (18) und am zweiten Flankenbereich (20) angeordnetes zweites oberes Verstärkungselement (32), und
f) ein am ersten Wulstbereich (14) angeordnetes erstes unteres Verstärkungselement (34) und ein am zweiten Wulstbereich (22) angeordnetes zweites unteres Verstärkungselement (36),
wobei das erste obere Verstärkungselement (30) und das zweite obere Verstärkungselement (32) von dem ersten unteren Verstärkungselement (34) und dem zweiten unteren Verstärkungselement (36) beabstandet sind, wobei die erste Kernfahne (26) und/oder die zweite Kernfahne (28) zweiteilig ausgeführt ist,
**dadurch gekennzeichnet, dass**
die erste Kernfahne (26) teilweise zwischen dem ersten Wulstbereich (14) und dem ersten Umschlagbereich (40) sowie teilweise an der Außenseite des ersten Umschlagbereichs (40) angeordnet ist
und/oder
die zweite Kernfahne (28) teilweise zwischen dem zweiten Wulstbereich (22) und dem zweiten Umschlagbereich (42) sowie teilweise an der Außenseite des zweiten Umschlagbereichs (42) angeordnet ist.

2. Fahrzeugluftreifen (10) nach Anspruch 1, wobei das erste obere Verstärkungselement (30) und das zweite obere Verstärkungselement (32) voneinander beabstandet sind, oder wobei das erste obere Verstärkungselement (30) und das zweite obere Verstärkungselement (32) durch eine Verstärkungslage (38) gebildet werden, wobei sich die Verstärkungslage (38) bevorzugt über den gesamten Zentralbereich (18) in die Flankenbereiche erstreckt.

3. Fahrzeugluftreifen (10) nach einem der Ansprüche 1 oder 2, wobei das erste obere Verstärkungselement (30) und das zweite obere Verstärkungselement (32) auf der Außen- oder Innenseite, bevorzugt auf der Innenseite, der Reifenkarkasse (12) angeordnet sind, und/oder wobei das erste untere Verstärkungselement (34) und das zweite untere Verstärkungselement (36) auf der Außen- oder Innenseite, bevorzugt auf der Innenseite, der Reifenkarkasse (12) angeordnet sind.

4. Fahrzeugluftreifen (10) nach einem der Ansprüche 1 bis 3, wobei die Reifenkarkasse (12) zusätzlich einen mit dem ersten Wulstbereich (14) verbundenen ersten Umschlagbereich (40) und/oder einen mit dem zweiten Wulstbereich (22) verbundenen zweiten Umschlagbereich (42) umfasst, wobei der erste Umschlagbereich (40) und/oder der zweite Umschlagbereich (42) relativ zum jeweiligen Wulstbereich bevorzugt außen liegen.

5. Fahrzeugluftreifen (10) nach einem der Ansprüche 1 bis 4, wobei die Reifenkarkasse (12) eine oder mehrere Karkasslagen, bevorzugt genau eine Karkasslage, umfasst, und wobei sich bevorzugt zumindest eine Karkasslage, besonders bevorzugt sämtliche Karkasslagen, als durchgehende Karkasslage durch alle Bereiche der Reifenkarkasse (12) erstreckt.

6. Fahrzeugluftreifen (10) nach Anspruch 5, wobei die eine oder die mehreren Karkasslagen eine Vielzahl von Karkassen-Festigkeitsträgern umfassen, die in einem Karkassen-Gummiwerkstoff eingebettet sind.

7. Fahrzeugluftreifen (10) nach Anspruch 6, wobei die erste Kernfahne (26) und/oder die zweite Kernfahne (28) einen Kernfahnen-Gummiwerkstoff umfasst, wobei der Kernfahnen-Gummiwerkstoff einen höheren E-Modul aufweist, als der Karkassen-Gummiwerkstoff, wobei der Kernfahnen-Gummiwerkstoff bevorzugt einen höheren E-Modul aufweist als die Gummiwerkstoffe der Verstärkungselemente.

8. Fahrzeugluftreifen (10) nach einem der Ansprüche 1 bis 7, wobei das erste obere Verstärkungselement (30) einen ersten Gummiwerkstoff umfasst, und/oder wobei das zweite obere Verstärkungselement (32) einen zweiten Gummiwerkstoff umfasst, und/oder wobei das erste untere Verstärkungselement (34) einen dritten Gummiwerkstoff umfasst, und/oder wobei das zweite untere Verstärkungselement (36) einen vierten Gummiwerkstoff umfasst, wobei der erste Gummiwerkstoff und/oder der zweite Gummiwerkstoff und/oder der dritte Gummiwerkstoff und/oder der vierte Gummiwerkstoff, bevorzugt sämtliche Gummiwerkstoffe, einen höheren E-Modul aufweist, als der Karkassen-Gummiwerkstoff.

9. Fahrzeugluftreifen (10) nach einem der Ansprüche 1 bis 8, wobei das erste obere Verstärkungselement (30) eine Vielzahl an ersten Festigkeitsträgern umfasst, und/oder wobei das zweite obere Verstärkungselement (32) eine Vielzahl an zweiten Festigkeitsträgern umfasst, und/oder wobei das erste untere Verstärkungselement (34) eine Vielzahl an dritten Festigkeitsträgern umfasst, und/oder wobei das zweite untere Verstärkungselement (36) eine Vielzahl an vierten Festigkeitsträgern umfasst, wobei die ersten Festigkeitsträger und/oder zweiten Festigkeitsträger und/oder dritten Festigkeitsträger und/oder vierten Festigkeitsträger, bevorzugt die dritten Festigkeitsträger und vierten Festigkeitsträger, besonders bevorzugt sämtliche dieser Festigkeitsträger, von den Karkassen-Festigkeitsträger verschieden sind, bevorzugt hinsichtlich des Materials und/der der Feinheit.

10. Fahrzeugluftreifen (10) nach einem der Ansprüche 1 bis 9, wobei die Festigkeitsträger im ersten oberen Verstärkungselement (30) und/oder im ersten unteren Verstärkungselement (34) und/oder im zweiten oberen Verstärkungselement (32) und/oder im zweite unteren Verstärkungselement (36), bevorzugt die Festigkeitsträger im ersten unteren Verstärkungselement (34) und im zweiten unteren Verstärkungselement (36), einen Kordwinkel relativ zur Umfangsrichtung aufweisen, der sich vom Kordwinkel der Karkassen-Festigkeitsträger in der Reifenkarkasse (12) unterscheidet.

## Claims

1. Pneumatic vehicle tyre (10), comprising:
a) a tyre carcass (12) with a first bead area (14), a first sidewall area (16), a central area (18), a second sidewall area (20) and a second bead area (22),
b) a first flipper strip (26), arranged at the first bead area (14), and a second flipper strip (28), arranged at the second bead area (22),
c) the tyre carcass (12) is turned up around the respective flipper strips (26, 28) and forms on the sides of the tyre carcass (12) the first turn-up area (40) and the second turn-up area (42),
d) a tread (24), lying on the outside in the radial direction relative to the tyre carcass (12) and arranged over the central area,
e) a first upper reinforcing element (30), arranged at the central area (18) and at the first sidewall area (16), and a second upper reinforcing element (32), arranged at the central area (18) and at the second sidewall area (20), and
f) a first lower reinforcing element (34), arranged at the first bead area (14), and a second lower reinforcing element (36), arranged at the second bead area (22),
the first upper reinforcing element (30) and the second upper reinforcing element (32) being located at a distance from the first lower reinforcing element (34) and the second lower reinforcing element (36), wherein the first flipper strip (26) and/or the second flipper strip (28) is/are of a two-part design,
**characterized in that**
the first flipper strip (26) is arranged partially between the first bead area (14) and the first turn-up area (40) and partially on the outer side of the first turn-up area (40)
and/or
the second flipper strip (28) is arranged partially between the second bead area (22) and the second turn-up area (42) and partially on the outer side of the second turn-up area (42).

2. Pneumatic vehicle tyre (10) according to Claim 1, wherein the first upper reinforcing element (30) and the second upper reinforcing element (32) are located at a distance from one another, or wherein the first upper reinforcing element (30) and the second upper reinforcing element (32) are formed by a reinforcing ply (38), wherein the reinforcing ply (38) preferably extends over the entire central area (18) into the sidewall areas.

3. Pneumatic vehicle tyre (10) according to either of Claims 1 and 2, wherein the first upper reinforcing element (30) and the second upper reinforcing element (32) are arranged on the outer side or inner side, preferably on the inner side, of the tyre carcass (12), and/or wherein the first lower reinforcing element (34) and the second lower reinforcing element (36) are arranged on the outer side or inner side, preferably on the inner side, of the tyre carcass (12).

4. Pneumatic vehicle tyre (10) according to one of Claims 1 to 3, wherein the tyre carcass (12) additionally comprises a first turn-up area (40), connected to the first bead area (14), and/or a second turn-up area (42), connected to the second bead area (22), wherein the first turn-up area (40) and/or the second turn-up area (42) preferably lie(s) on the outside relative to the respective bead area.

5. Pneumatic vehicle tyre (10) according to one of Claims 1 to 4, wherein the tyre carcass (12) comprises one or more carcass plies, preferably exactly one carcass ply, and wherein preferably at least one carcass ply, particularly preferably all of the carcass plies, extend(s) as a continuous carcass ply through all of the areas of the tyre carcass (12).

6. Pneumatic vehicle tyre (10) according to Claim 5, wherein the one or more carcass plies comprise(s) a plurality of carcass strength members that are embedded in a carcass rubber material.

7. Pneumatic vehicle tyre (10) according to Claim 6, wherein the first flipper strip (26) and/or the second flipper strip (28) comprise(s) a flipper-strip rubber material, wherein the flipper-strip rubber material has a higher modulus of elasticity than the carcass rubber material, wherein the flipper-strip rubber material preferably has a higher modulus of elasticity than the rubber materials of the reinforcing elements.

8. Pneumatic vehicle tyre (10) according to one of Claims 1 to 7, wherein the first upper reinforcing element (30) comprises a first rubber material, and/or wherein the second upper reinforcing element (32) comprises a second rubber material, and/or wherein the first lower reinforcing element (34) comprises a third rubber material, and/or wherein the second lower reinforcing element (36) comprises a fourth rubber material, wherein the first rubber material and/or the second rubber material and/or the third rubber material and/or the fourth rubber material, preferably all of the rubber materials, has/have a higher modulus of elasticity than the carcass rubber material.

9. Pneumatic vehicle tyre (10) according to one of Claims 1 to 8, wherein the first upper reinforcing element (30) comprises a plurality of first strength members, and/or wherein the second upper reinforcing element (32) comprises a plurality of second strength members, and/or wherein the first lower reinforcing element (34) comprises a plurality of third strength members, and/or wherein the second lower reinforcing element (36) comprises a plurality of fourth strength members, wherein the first strength members and/or second strength members and/or third strength members and/or fourth strength members, preferably the third strength members and fourth strength members, particularly preferably all of these strength members, are different from the carcass strength members, preferably with regard to the material and/or the fineness.

10. Pneumatic vehicle tyre (10) according to one of Claims 1 to 9, wherein the strength members in the first upper reinforcing element (30) and/or in the first lower reinforcing element (34) and/or in the second upper reinforcing element (32) and/or in the second lower reinforcing element (36), preferably the strength members in the first lower reinforcing element (34) and in the second lower reinforcing element (36), have a cord angle relative to the circumferential direction that differs from the cord angle of the carcass strength members in the tyre carcass (12).

## Revendications

1. Pneumatique (10) de véhicule, comprenant :
a) une carcasse de pneu (12) avec une première zone de talon (14), une première zone de flanc (16), une zone centrale (18), une seconde zone de flanc (20) et une seconde zone de talon (22),
b) une première languette (26) disposée sur la première zone de talon (14) et une seconde languette (28) disposée sur la seconde zone de talon (22),
c) la carcasse de pneu (12) étant rabattue autour des languettes (26, 28) respectives et formant la première zone de rabattement (40) et la seconde zone de rabattement (42) sur les côtés de la carcasse de pneu (12),
d) une bande de roulement (24) située à l'extérieur dans la direction radiale par rapport à la carcasse (12) du pneu et disposée au-dessus de la zone centrale,
e) un premier élément de renfort supérieur (30) disposé sur la zone centrale (18) et sur la première zone de flanc (16) et un second élément de renfort supérieur (32) disposé sur la zone centrale (18) et sur la seconde zone de flanc (20), et
f) un premier élément de renfort inférieur (34) disposé sur la première zone de talon (14) et un second élément de renfort inférieur (36) disposé sur la seconde zone de talon (22),
le premier élément de renfort supérieur (30) et le second élément de renfort supérieur (32) étant espacés du premier élément de renfort inférieur (34) et du second élément de renfort inférieur (36), la première languette (26) et/ou la seconde languette (28) étant réalisées en deux parties,
**caractérisé en ce que**
la première languette (26) est disposée en partie entre la première zone de talon (14) et la première zone de rabattement (40) et en partie également sur le côté extérieur de la première zone de rabattement (40)
et/ou
la seconde languette (28) est disposée en partie entre la seconde zone de talon (22) et la seconde zone de rabattement (42) et en partie également sur le côté extérieur de la seconde zone de rabattement (42).

2. Pneumatique (10) de véhicule selon la revendication 1, le premier élément de renfort supérieur (30) et le second élément de renfort supérieur (32) étant espacés l'un de l'autre, ou le premier élément de renfort supérieur (30) et le second élément de renfort supérieur (32) étant formés par une nappe de renfort (38), la nappe de renfort (38) s'étendant de manière préférée sur toute la zone centrale (18) dans les zones de flanc.

3. Pneumatique (10) de véhicule selon l'une des revendications 1 et 2, le premier élément de renfort supérieur (30) et le second élément de renfort supérieur (32) étant disposés sur le côté extérieur ou intérieur, de manière préférée sur le côté intérieur, de la carcasse de pneu (12), et/ou le premier élément de renfort inférieur (34) et le second élément de renfort inférieur (36) étant disposés sur le côté extérieur ou intérieur, de manière préférée sur le côté intérieur, de la carcasse de pneu (12).

4. Pneumatique (10) de véhicule selon l'une des revendications 1 à 3, la carcasse de pneu (12) comprenant en supplément une première zone de rabattement (40) reliée à la première zone de talon (14) et/ou une seconde zone de rabattement (42) reliée à la seconde zone de talon (22), la première zone de rabattement (40) et/ou la seconde zone de rabattement (42) étant situées de manière préférée à l'extérieur par rapport à la zone de talon respective.

5. Pneumatique (10) de véhicule selon l'une des revendications 1 à 4, la carcasse de pneu (12) comprenant une ou plusieurs nappes de carcasse, de manière préférée exactement une nappe de carcasse, et au moins une nappe de carcasse, de manière particulièrement préférée toutes les nappes de carcasse, s'étendant de manière préférée en tant que nappe de carcasse continue à travers toutes les zones de la carcasse de pneu (12).

6. Pneumatique (10) de véhicule selon la revendication 5, une ou les plusieurs nappes de carcasse comprenant une pluralité d'éléments de renfort de carcasse qui sont intégrés dans un matériau de caoutchouc de carcasse.

7. Pneumatique (10) de véhicule selon la revendication 6, la première languette (26) et/ou la seconde languette (28) comprenant un matériau de caoutchouc de languette, le matériau de caoutchouc de languette présentant un module d'élasticité plus élevé que celui du matériau de caoutchouc de carcasse, le matériau de caoutchouc de languette présentant de manière préférée un module d'élasticité plus élevé que celui des matériaux de caoutchouc des éléments de renfort.

8. Pneumatique (10) de véhicule selon l'une des revendications 1 à 7, le premier élément de renfort supérieur (30) comprenant un premier matériau de caoutchouc, et/ou le second élément de renfort supérieur (32) comprenant un deuxième matériau de caoutchouc, et/ou le premier élément de renfort inférieur (34) comprenant un troisième matériau de caoutchouc, et/ou le second élément de renfort inférieur (36) comprenant un quatrième matériau de caoutchouc, le premier matériau de caoutchouc et/ou le deuxième matériau de caoutchouc et/ou le troisième matériau de caoutchouc et/ou le quatrième matériau de caoutchouc, de manière préférée tous les matériaux de caoutchouc, présentant un module d'élasticité plus élevé que celui du matériau de caoutchouc de carcasse.

9. Pneumatique (10) de véhicule selon l'une des revendications 1 à 8, le premier élément de renfort supérieur (30) comprenant une pluralité de premiers éléments de renfort, et/ou le second élément de renfort supérieur (32) comprenant une pluralité de deuxièmes éléments de renfort, et/ou le premier élément de renfort inférieur (34) comprenant une pluralité de troisièmes éléments de renfort, et/ou le second élément de renfort inférieur (36) comprenant une pluralité de quatrièmes éléments de renfort, les premiers éléments de renfort et/ou les deuxièmes éléments de renfort et/ou les troisièmes éléments de renfort et/ou les quatrièmes éléments de renfort, de manière préférée les troisièmes éléments de renfort et les quatrièmes éléments de renfort, de manière préférée tous ces éléments de renfort, étant différents des éléments de renfort de carcasse, de manière préférée en ce qui concerne le matériau et/ou la finesse.

10. Pneumatique (10) de véhicule selon l'une des revendications 1 à 9, les éléments de renfort dans le premier élément de renfort supérieur (30) et/ou dans le premier élément de renfort inférieur (34) et/ou dans le second élément de renfort supérieur (32) et/ou dans le second élément de renfort inférieur (36), de manière préférée les éléments de renfort dans le premier élément de renfort inférieur (34) et dans le second élément de renfort inférieur (36), présentant un angle de câble par rapport à la direction périphérique, qui diffère de l'angle de câble des éléments de renfort de carcasse dans la carcasse de pneu (12).
